# FASCICULE DE BREVET EUROPEEN

(11) **EP 3 847 738 B1**
(45) Date de publication et mention de la délivrance du brevet: **21.08.2024**
(21) Numéro de dépôt: 19762810.0
(22) Date de dépôt: 06.09.2019
(51) Int. Cl.: H02K 3/50

(54) **MACHINE ELECTRIQUE TOURNANTE MUNIE D'UN INTERCONNECTEUR A PATTES INCLINEES**
ELEKTRISCHE ROTIERENDE MASCHINE MIT EINEM VERBINDUNGSELEMENT MIT GEWINKELTEN LASCHEN
ROTARY ELECTRIC MACHINE PROVIDED WITH AN INTERCONNECTOR WITH ANGLED TABS

(30) Priorité: 07.09.2018 FR 1858062; 07.09.2018 FR 1858063; 07.09.2018 FR 1858064; 07.09.2018 FR 1858066
(43) Date de publication de la demande: 14.07.2021
(73) Titulaire: Valeo Electrification, 95800 Cergy (FR)
(72) Inventeur: SAPOTILLE, Larry, 94046 Créteil (FR); DUQUESNE, Jean, 62630 Etaples Sur Mer (FR); DARRAS, Ludovic, 62630 Etaples Sur Mer (FR); PEREIRA-CRAVO, Alexandre, 94046 Créteil (FR); FRANKE, Benoît, 94046 Créteil (FR); HUSSON, Pierrick, 94046 Créteil (FR)
(74) Mandataire: Valeo Powertrain Systems
(86) Numéro de dépôt international: PCT/EP2019/073901
(87) Numéro de publication internationale: WO 2020/049178

(56) Documents cités:
- EP-A1- 3 280 034
- WO-A1-2015/188983
- DE-A1- 102007 034 327
- US-A1- 2013 249 334
- US-A1- 2014 183 993
- US-A1- 2016 020 660

## Description

L'invention porte sur un interconnecteur à pattes de connexion de portion de conducteur de bobinage, inclinées par rapport à l'axe de la machine sur laquelle l'interconnecteur est monté.

De façon connue en soi, les machines électriques tournantes comportent un stator et un rotor solidaire d'un arbre. Le rotor peut être solidaire d'un arbre menant et/ou mené et peut appartenir à une machine électrique tournante sous la forme d'un alternateur, d'un moteur électrique, ou d'une machine réversible pouvant fonctionner dans les deux modes.

Par ailleurs, le stator est monté dans un carter configuré pour porter à rotation l'arbre par exemple par l'intermédiaire de roulements. Le stator comporte un corps constitué par un empilage de tôles minces formant une culasse en forme de couronne dont la face intérieure est pourvue d'encoches ouvertes vers l'intérieur pour recevoir un bobinage.

Dans un bobinage de type ondulé, les enroulements de phase sont formés chacun à partir d'au moins un conducteur de bobinage, tel qu'un fil continu, recouvert d'une couche isolante, en particulier une couche d'émail. Alternativement, le bobinage est obtenu à partir de conducteurs de bobinage en forme d'épingles reliées électriquement entre eux par exemple par soudage.

Des portions de conducteur de bobinage doivent être reliées électriquement via un interconnecteur pour obtenir un couplage électrique souhaité de la machine, par exemple en triangle ou en étoile, comme cela est connu des documents US2013/249334, DE102007034327 ou EP3280034. A cet effet, des connexions électriques entre ces portions de conducteurs de bobinage et des pattes de l'interconnecteur seront nécessaires.

Dans de tels interconnecteurs connus du document US 2014/0183993, l'opération de connexion électrique des portions de conducteurs de bobinage aux pattes de l'interconnecteur, peut être rendue complexe par la proximité entre les portions de conducteur et le palier arrière dans lequel il est monté notamment, et à l'issue de l'opération de connexion, les portions de conducteur connectées créent un encombrement important à l'origine notamment d'un risque de formation de ponts salins.

La présente invention vise à remédier efficacement à ces inconvénients en proposant un interconnecteur selon la revendication 1.

Une telle configuration de pattes inclinées par rapport à l'axe de la machine permet de gagner un jeu axial et un jeu radial entre le palier arrière et la soudure. Ce jeu supplémentaire permet d'avoir un encombrement plus faible et réduit les risques de ponts salins.

Selon une réalisation, la distance à l'axe diminue continûment au fur et à mesure que l'on se rapproche de l'extrémité libre.

Selon une réalisation, dans un plan de coupe perpendiculaire à l'axe, les pattes présentent sensiblement une même distance à l'axe, quel que soit le plan de coupe perpendiculaire à l'axe.

Selon l'invention, les surfaces d'extrémité radiale des pattes sont parallèles. Cela permet de simplifier le procédé de connexion de l'interconnecteur en facilitant l'approche des portions de conducteur du bobinage

Selon une réalisation, l'interconnecteur comprend également des clips de maintien d'autres conducteurs de bobinage adaptés pour diriger une autre portion de conducteur de bobinage vers une électronique de commande. Cela permet de faciliter le maintien des conducteurs allant vers l'électronique tout diminuant l'impact des vibrations sur ces conducteurs et donc en diminuant le risque de casse.

Selon une réalisation, l'interconnecteur comprend également au moins un corps conducteur, les pattes étant connectées entre elles par le corps conducteur. Cette structure d'interconnecteur est simple à réaliser et compacte.

Selon une réalisation, les surfaces libres des pattes sont sensiblement parallèles. Cela permet de simplifier l'étape de soudure sans avoir à changer la hauteur de l'appareil de soudage par exemple du laser.

L'invention concerne également une machine comprenant un bobinage statorique s'étendant autour de l'axe selon une direction circonférentielle, un interconnecteur tel que précédemment décrit. Selon l'invention, les pattes de l'interconnecteur sont disposées le long de la direction circonférentielle du bobinage statorique. Cela permet de minimiser les mouvements de l'appareil de soudure et donc de simplifier le procédé de connexion du bobinage. Selon une réalisation, la portion de conducteur de bobinage est fixée à la surface de connexion de la patte par soudure laser.

Selon une réalisation, chaque patte de l'interconnecteur est connectée à une portion de conducteur du bobinage appartenant à une phase distincte du bobinage. Cela permet de réaliser le point neutre ou le couplage en triangle dudit bobinage statorique.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en coupe partielle d'une machine électrique tournant destinée à porter un interconnecteur selon la présente invention;
La figure 2 est une vue en perspective du stator portant l'interconnecteur selon l'invention assurant le couplage des portions de conducteur de bobinage;
La figure 3 montre une vue en perspective de l'interconnecteur selon la présente invention;
La figure 4 montre une patte de l'interconnecteur inclinée connectée à une portion de conducteur selon la présente invention;
La figure 5 est une vue de dessus de l'interconnecteur selon la présente invention;
La figure 6 est une vue en perspective des éléments conducteurs de l'interconnecteur selon la présente invention hors surmoulage;
La figure 7 illustre la fixation des pattes aux portions de conducteur par soudure laser.
Les figures 8a et 8b sont des vues de détail des dispositifs de maintien et d'appui pour le moulage du boitier sur les deux éléments conducteurs ;.
La figure 9a est une vue de dessus de l'interconnecteur illustrant des moyens de guidage étant des trous percés dans le boitier;
La figure 9b illustre une forme particulière des moyens de guidage de la figure 9a;

Les éléments identiques, similaires, ou analogues conservent la même référence d'une figure à l'autre.

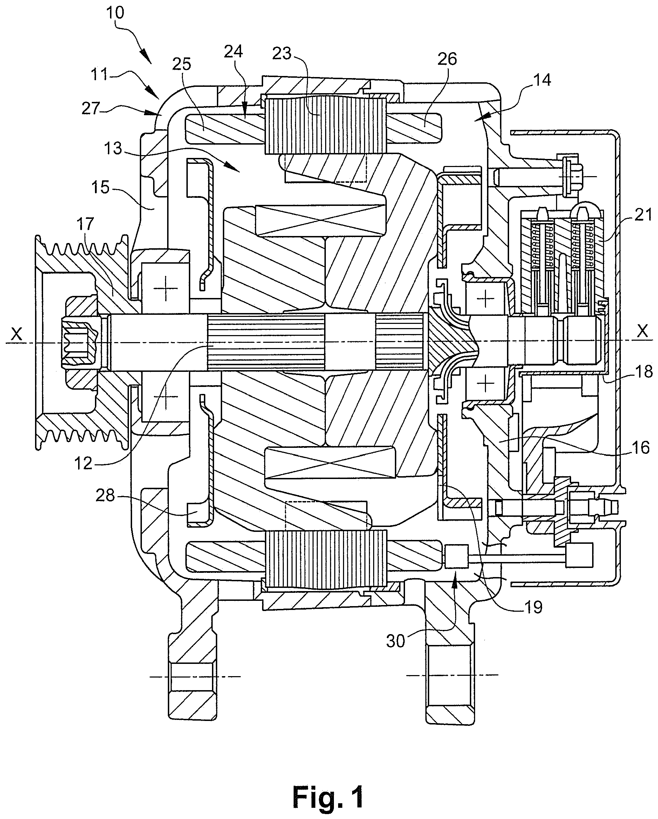

La figure 1 représente une machine électrique tournante 10 compacte et polyphasée, notamment pour véhicule automobile. Cette machine électrique tournante transforme de l'énergie mécanique en énergie électrique, en mode alternateur, et peut fonctionner en mode moteur pour transformer de l'énergie électrique en énergie mécanique. Cette machine électrique tournante est, par exemple, un alternateur ou une machine réversible.

La machine électrique tournante comporte un carter 11. A l'intérieur de ce carter, elle comporte, en outre, l'arbre 12, le rotor 13 solidaire en rotation de l'arbre et le stator 14 entourant le rotor. Le mouvement de rotation du rotor 12 se fait autour d'un axe X, qui est l'axe de la machine. Dans la suite de la description les orientations radiales, ortho-radiale et axiales sont à considérer par rapport à cet axe X. Dans la suite de la description la partie arrière est la partie de la machine comprenant l'électronique et la partie avant est la partie de la machine du côté de la poulie.

Dans cet exemple, le carter 11 comporte un palier avant 15 et un palier arrière 16 qui sont assemblés ensemble. Ces paliers sont de forme creuse et portent, chacun, centralement un roulement à billes respectif pour le montage à rotation de l'arbre 12.

Une poulie 17 est fixée sur une extrémité avant de l'arbre 12, au niveau du palier avant. Cette poulie 17 permet de transmettre le mouvement de rotation à l'arbre. L'extrémité arrière de l'arbre 12 porte un collecteur 18. Un porte-balais 21 alimente le rotor via le collecteur et est relié à un régulateur (non représenté) de tension compris dans un pont redresseur.

Le palier avant 15 et le palier arrière 16 peuvent comporter, en outre, des ouvertures 27 sensiblement latérales pour le passage de l'air en vue de permettre le refroidissement de la machine électrique tournante par circulation d'air engendrée par la rotation d'un ventilateur 28 avant sur la face avant du rotor, c'est-à-dire au niveau du palier avant et d'un ventilateur arrière 19 sur la face arrière du rotor, c'est-à-dire au niveau du palier arrière.

Dans cet exemple de réalisation, le stator 14 comporte un corps en forme d'un paquet de tôles 23 doté d'encoches, par exemple du type semi fermée ou ouverte, équipées d'isolant d'encoches pour le montage d'un bobinage statorique 24. Le corps de stator a une forme cylindrique annulaire d'axe X. Le bobinage 24 traverse les encoches du corps et forme un chignon avant 25 et un chignon arrière 26 de part et d'autre du corps du stator 14.

Le bobinage s'étend selon une direction circonférentielle autour de l'axe X tout le long du corps du stator. Le bobinage 24 s'étend par ailleurs radialement entre une périphérie intérieure de bobinage plus proche de l'axe X et une périphérie extérieure de bobinage plus proche du palier.

Dans cet exemple, le rotor 13 est un rotor à griffe comportant deux roues polaires. Lorsque le rotor 13 est magnétisé et devient un rotor inducteur avec formation de pôles magnétiques Nord-Sud, un courant induit alternatif est créé dans le bobinage 24 du stator 14 induit par la rotation de l'arbre 12.

Un pont redresseur formé par des modules électroniques de puissance (non représentés) transforme alors ce courant induit alternatif généré par la machine en un courant continu, notamment pour alimenter les charges et les consommateurs du réseau de bord du véhicule automobile ainsi que pour recharger sa batterie. Ces modules ou d'autres modules de puissance pourront également être commandés pour injecter du courant dans les différentes phases de la machine électrique lorsque cette dernière fonctionne en mode moteur.

Le bobinage statorique 24 est composé d'une pluralité de conducteurs formant les phases. Plus précisément, chaque phase comprend une première extrémité de conducteur électrique 240 formant un point neutre électrique, une deuxième extrémité de conducteur électrique 242 formant un point de connexion d'une sortie de phase, les terminaux de connexion de phase étant donc formés par deux extrémités de conducteur.

Les deuxièmes extrémités de conducteur 242 sont reliées électriquement aux modules électroniques de puissance.

Dans ce qui suivra, on entendra par circonférence statorique une courbe parmi les courbes épousant la position moyenne du bobinage statorique. Une circonférence statorique sera par exemple donnée par un cercle centré sur l'axe X et passant par les extrémités des conducteurs.

Dans ce qui suivra, on entendra par secteur angulaire l'angle défini le long du bobinage statorique, depuis le centre de la machine, autour de l'axe X, dans un plan orthogonal à l'axe de la machine

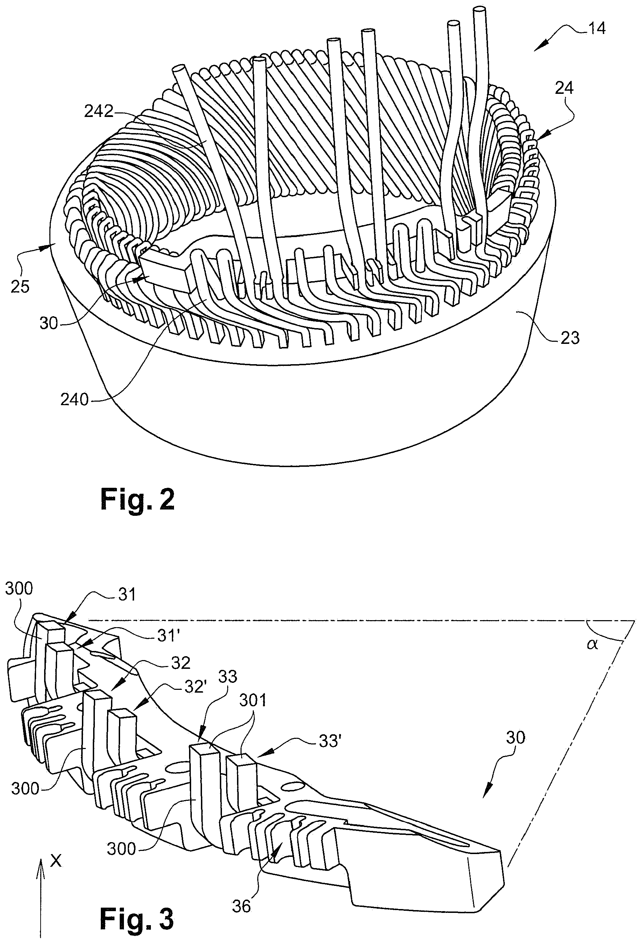

Avantageusement, comme illustré à la figure 2, les extrémités de conducteur 240, 242 sont donc sur la même circonférence statorique et s'étendent le long d'un secteur angulaire du stator 14. L'écart angulaire entre les premières extrémités des phases 240 est constant le long du secteur angulaire dans laquelle se situent les extrémités, tel que cela est montré sur la figure 2. De la même manière l'écart angulaire entre les deuxièmes extrémités des phases 242 est constant le long du secteur angulaire dans laquelle elles se situent. Les extrémités de conducteur sont en sortie de bobinage, sensiblement orientés selon l'axe X.

Dans un premier mode de réalisation, le bobinage est un bobinage tri-phasé. Les portions de conducteurs de bobinage 240 à interconnecter sont alors les premières extrémités de conducteur électrique, à relier au point neutre électriquement.

Les premières extrémités 240 connectées au point neutre sont reliées au moyen d'un interconnecteur 30 visible sur la figure 2. Cet interconnecteur 30 s'étend suivant une forme en arc de cercle sur un secteur angulaire d'angle α autour de l'axe X au-dessus du chignon avant (ou arrière), c'est-à-dire dans un plan orthogonal à l'axe de la machine X. L'interconnecteur 30 s'étend suivant un secteur angulaire limité compris entre 30° et 90°. L'interconnecteur 30 suit avantageusement la courbure autour de l'axe X du chignon avant, sous forme d'un arc.

L'interconnecteur 30 positionné sensiblement entre les périphéries intérieure et extérieure du bobinage, peut dépasser notamment radialement du bobinage statorique.

L'interconnecteur 30 comprend avantageusement trois pattes 31, 32, 33, électriquement conductrices, décalées angulairement. Les pattes 31, 32, 33 sont distribuées le long de l'arc de l'interconnecteur en suivant avantageusement la courbure de l'interconnecteur, comme illustré à la figure 3. Les pattes sont avantageusement angulairement proches c'est-à-dire séparées d'une faible distance circonférentielle qui correspond avantageusement à la distance séparant les premières extrémités de conducteur.

Chaque patte de l'interconnecteur positionnée radialement entre l'axe de la machine et le palier, s'étend dans une direction inclinée par rapport à l'axe X. Les pattes de l'interconnecteur s'étendent avantageusement du même côté du bobinage statorique 24 que les extrémités des conducteurs 240, 242.

Un corps conducteur 34 relie avantageusement électriquement les pattes entre elles. Le corps 34 s'étend par exemple dans un plan d'extension de l'interconnecteur 30 et les pattes 31, 32, 33 s'étendent depuis le corps de l'interconnecteur 34. Les pattes s'étendent par exemple selon une première portion 341 contenue dans le plan du corps puis une portion adjacente 342 transverse à la portion précédente et s'étendant selon une direction inclinée par rapport à l'axe X, comme illustré sur la figure 3. Les pattes ont ainsi une forme coudée, la portion adjacente 342 n'étant pas coaxiale avec l'axe X de la machine.

Une telle forme pourra notamment être obtenue par pliage des pattes. Ce pliage des pattes peut être effectué en plusieurs étapes ou en une seule étape en fonction de l'angle final souhaité.

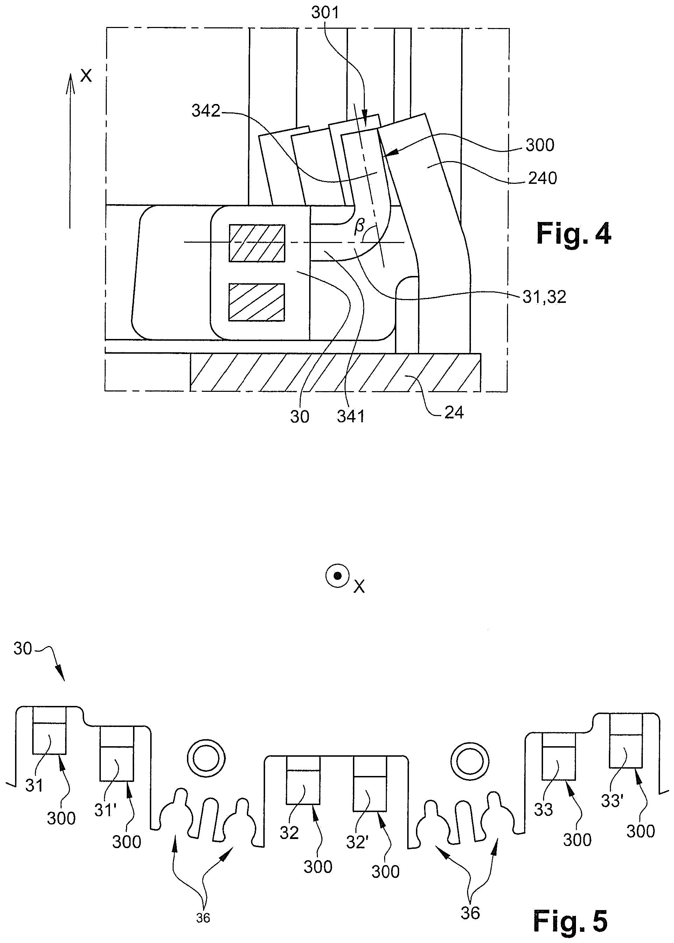

Comme illustré à la figure 4, chaque patte de fixation présente donc une distance variable à l'axe au fur et à mesure que l'on se rapproche de son extrémité libre. En particulier la portion adjacente 342 aura une distance à l'axe variable au fur et à mesure que l'on se rapproche de son extrémité libre. La distance pourra par exemple avantageusement diminuer continûment depuis l'extrémité reliée à la première portion 341 jusqu'à l'extrémité libre 301. On entend par diminuer continûment que la distance entre la portion et l'axe diminue de manière linéaire et plus précisément de manière proportionnelle à la hauteur de la portion par rapport au corps 34.

Chaque patte présente une surface d'extrémité radiale 300 illustrée à la figure 3, avantageusement portée par la portion adjacente 342, c'est-à-dire la portion de la patte adjacente à l'extrémité libre 301 de la patte.

Les pattes sont par exemple à section rectangulaire dans le plan transverse à leur direction d'extension, de sorte que la surface d'extrémité radiale 300 est opposée à une surface opposée, les deux surfaces étant séparées par le conducteur, l'une des surfaces étant en regard du palier et la surface opposée étant en regard de l'axe X de la machine, les deux surfaces étant séparées par une faible épaisseur.

Ainsi la première portion 341 et la portion adjacente 342 d'une patte font avantageusement un angle β entre elles dans un plan contenant l'axe X et perpendiculaire à la surface d'extrémité radiale 300 de la patte. L'angle β aura une valeur avantageusement comprise entre 20° et 85° et notamment comprise entre 60° et 85°.

Un élément conducteur est ainsi formé par ledit corps 34 et les pattes 31, 32, 33. Les pattes d'un élément conducteur ont avantageusement toute sensiblement la même inclinaison par rapport à l'axe X. Ainsi dans un plan de coupe perpendiculaire à l'axe X, les pattes 31, 32 présentent sensiblement une même distance à l'axe, quel que soit le plan de coupe perpendiculaire à l'axe.

La surface d'extrémité radiale 300 définit une surface de connexion pour une première extrémité du conducteur 240. Une faible inclinaison de la première extrémité de conducteur 240 permet de l'amener en contact avec la surface d'extrémité radiale 300 pour connexion.

D'une patte à l'autre, ces surfaces d'extrémité radiale 300 sont parallèles, comme illustré à la figure 5. Les surfaces de connexion étant parallèles, cela permet de faciliter l'approche des portions de conducteurs pour la connexion selon une direction commune.

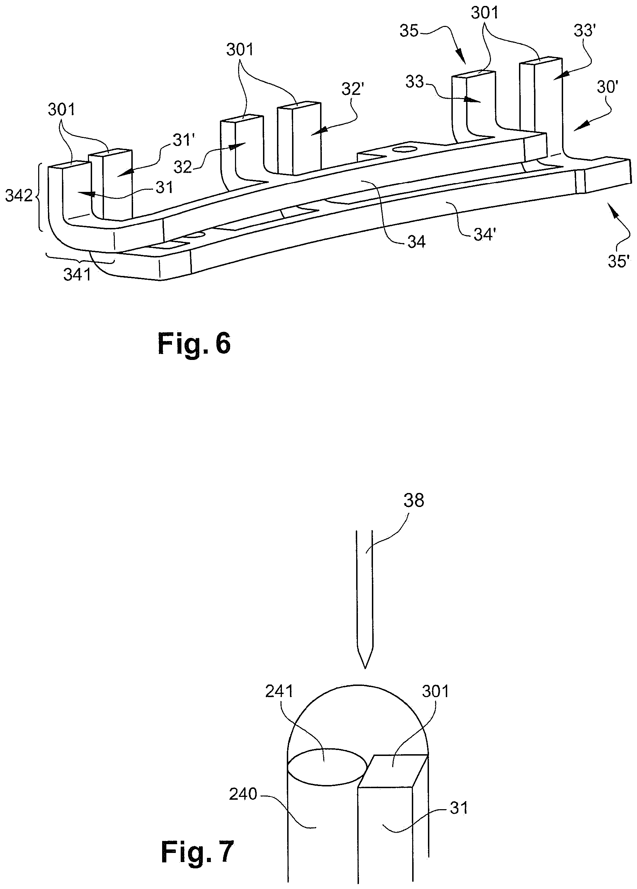

Dans une variante du premier mode de réalisation, le stator 14 présente un bobinage double triphasé. L'interconnecteur 30 comprend alors deux éléments conducteurs 35 et 35'. Chaque élément conducteur est formé du corps conducteur 34, 34' connectant électriquement trois pattes 31, 32, 33 et 31', 32', 33' entre elles. Les deux corps conducteurs 34, 34' sont non électriquement connectés, chacun des éléments conducteurs permettant de connecter un des deux systèmes triphasés. Toutes les pattes 31, 32, 33, 31', 32', 33' sont coudées selon la même inclinaison et toutes les surfaces d'extrémité radiales 300 des pattes sont parallèles pour cet interconnecteur, comme illustré à la figure 6.

Les pattes des deux éléments conducteurs 35 et 35' seront avantageusement intercalées c'est-à-dire que deux pattes adjacentes de l'interconnecteur 30 selon la direction circonférentielle appartiendront à deux éléments conducteurs différents.

Afin d'établir les connexions, les trois premières extrémités 240 du premier système triphasé sont reliées électriquement au premier élément conducteur 35, et les trois autres premières extrémités du deuxième système triphasé sont reliées électriquement au deuxième élément conducteur 35'. Comme on peut le voir sur la figure 6, les corps conducteurs s'étendent sensiblement parallèlement l'un par rapport à l'autre formant ainsi un écart constant entre les corps conducteurs 34, 34' sensiblement sur toute la longueur sur laquelle s'étendent les éléments conducteurs, une couche de matériau électriquement isolant étant par exemple interposée entre les deux éléments conducteurs.

En variante les éléments conducteurs 35, 35' sont partiellement surmoulés par une matière isolante, formant ainsi l'interconnecteur. La matière isolante pourra être une matière plastique renforcée par des fibres ou encore une résine.

En variante les deux corps conducteurs 34, 34' s'étendent l'un à côté de l'autre le long de la circonférence du bobinage.

Sans déviation nécessaire du fil, les premières extrémités de conducteur 240 sortent chacune parallèle et sont légèrement inclinées d'un même angle pour être amenées en regard d'une surface de connexion 300 d'une patte à fixer et chacune est directement connectée sur la surface de connexion 300 de la patte en regard.

Dans un deuxième mode de réalisation non illustré, les portions de conducteurs de bobinage 240 à interconnecter sont des extrémités d'interconnexion d'une même phase d'un bobinage à ramener au même potentiel, par exemple.

Quel que soit le mode de réalisation, l'interconnecteur 30 pourra comprendre des clips de maintien 36 notamment pour les deuxièmes extrémités de conducteur 242 destinées à être connectées à l'électronique, comme expliqué précédemment. De tels clips 36 permettent notamment de maintenir ces deuxièmes extrémités de conducteur 242 et de les diriger vers l'électronique. De tels clips de maintien 36 s'étendent par exemple dans le plan de l'interconnecteur et se présentent sous la forme de mâchoires. Les clips 36 sont avantageusement venus de matière avec l'interconnecteur 30.

Les clips s'étendent par exemple dans le plan d'extension du boitier, transversalement à l'axe X de la machine. Les clips sont ainsi avantageusement transverses à la direction de sortie des extrémités de conducteurs à diriger vers l'électronique de commande. Les clips sont par exemple venus de matière avec le boitier.

Les clips se présentent par exemple sous forme de mâchoire déformable, adaptées pour y insérer les extrémités de conducteur en force. En variante, les clips se présentent sous forme de mâchoires non déformable, les extrémités de conducteurs étant glissées dans les mâchoires lors du montage de l'interconnecteur sur le bobinage.

Les clips de maintien sont des moyens de guidage dans un premier mode de réalistaion.

En variante, les moyens de guidage sont des trous percés dans le boitier, selon l'axe de la machine par exemple, c'est-à-dire avantageusement transverses à la direction de sortie des extrémités de conducteurs à diriger vers l'électronique de commande.

Au moins un des trous a notamment une forme adaptée pour y insérer un conducteur matricé dont la section est donc variablement circulaire et rectangulaire.

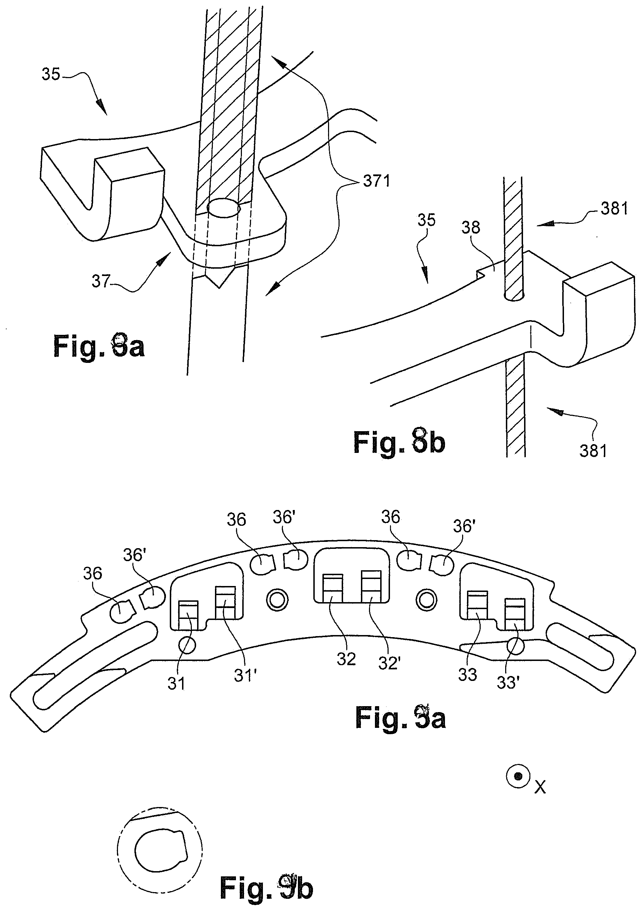

Le trou a pour cela une forme telle qu'illustrée à la figure 9 avec notamment une partie arrondie et une partie rectiligne.

Le jeu entre le fil et le trou est notamment le plus petit possible pour pouvoir bloquer totalement le conducteur dans le trou simplement par ajout d'un peu vernis.

Chaque première extrémité de conducteur 240 est avantageusement fixée à la patte en regard à laquelle elle devra être connectée, par soudure laser, illustrée à la figure 7. La soudure est réalisée au niveau de la surface d'extrémité libre de la patte 301, et d'une surface d'extrémité à souder 241 de l'extrémité du conducteur. Ces surfaces d'extrémité 241 et 301 sont avantageusement sensiblement de même dimension, avec un écart de l'ordre de 20 pourcents.

En pratique l'extrémité du conducteur 240 sera préalablement coupée net, puis un outillage plie et maintien cette extrémité de conducteur à souder en appui sur la surface d'appui 300 de la patte.

Les surfaces des extrémités libres 301 des pattes 31, 32, 33, 31', 32', 33' seront avantageusement sensiblement toutes contenues dans un même plan, par exemple transverse à l'axe X. Cela simplifie le processus de fixation des pattes en minimisant par exemple le déplacement d'une éventuelle tête laser dans le cas d'une soudure des pattes successives sur les portions de conducteurs correspondantes par une telle tête, décrite par la suite.

Les surfaces d'extrémité à souder 241 sont alors également avantageusement sensiblement contenues dans ce même plan, qui sera le plan de soudure.

Le plan de soudure comprenant donc à la fois les surfaces à souder des extrémités de conducteurs 241 et extrémités libres 301 des pattes correspondantes, ceci permet de simplifier l'enchainement des soudures en ayant notamment pas à modifier la hauteur du laser 38 pour le tir.

En variante les extrémités de conducteurs 241 sont dans des plans parallèles. De même les extrémités libres 301 sont également dans les plans parallèles.

Le choix de deux matériaux identiques pour la patte et la portion de conducteur 240 permet d'améliorer encore la soudure, comme un cuivre quasi pur notamment.

L'extrémité de conducteur 240 à souder sera dénudée par exemple sur une hauteur selon X de 4mm, avantageusement 3mm, depuis la surface à souder 241, et une longueur de patte de 4 mm selon l'axe X dépassera avantageusement du surmoulage plastique de l'interconnecteur 30.

L'extrémité de conducteur 240 sera ainsi avantageusement suffisamment dénudée et la surface d'extrémité libre 301 de la patte suffisamment éloignée du plastique de l'interconnecteur 30 pour que la chaleur générée par le tir laser à proximité du point de soudure ne risque pas de brûler l'émail du conducteur ou le plastique de l'interconnecteur, pouvant générer des gaz et des projections de matière. De tels gaz pouvant contaminer la soudure et générer l'apparition de bulle à l'intérieur et les projections de matières pouvant contaminer la soudure en cours, les pattes voisines, le stator et les outillages sont ainsi évités autant que possible.

L'axe du laser 38 réalisant la soudure est utilisé perpendiculairement au plan de soudure, donc selon l'axe des pattes ici typiquement.

On utilisera un laser bispot (tir en deux points et non en un seul), permettant de tirer simultanément sur les deux surfaces à souder 241 et 301. Cela permettra notamment de souder malgré un léger décalage axial entre la patte et l'extrémité de conducteur 240.

Pour fabriquer l'interconnecteur, les éléments conducteurs 35, 35' sont par exemple positionnés sensiblement parallèlement l'un au-dessus de l'autre selon l'axe X dans un moule. On entendra par l'un au-dessus de l'autre que les deux éléments conducteurs sont dans des plans sensiblement perpendiculaires à l'axe X et différents.

L'axe X est avantageusement transverse aux plans d'extension des corps des éléments conducteurs 34, 34'. Comme on peut le voir sur la figure 6, les corps conducteurs s'étendent sensiblement parallèlement l'un par rapport à l'autre formant ainsi un écart constant entre les corps conducteurs 34, 34' sensiblement sur toute la longueur sur laquelle s'étendent les éléments conducteurs.

Les connecteurs pourront être décalés autour de l'axe X, ou en variante éventuellement inclinés c'est-à-dire contenu dans des plans n'étant pas parfaitement perpendiculaires à l'axe X.

Un bon maintien des éléments conducteurs 35, 35' sera nécessaire préalablement à toute étape de moulage, une forte pression exercée sur les éléments conducteurs, notamment par l'injection du plastique dans le moule pour former l'interconnecteur, risquant de les déplacer ou même de les déformer.

Pour cela chaque élément conducteur 35 comprend une portion de maintien 37 permettant de maintenir axialement chaque élément conducteur, et de maintenir les éléments conducteurs l'un au-dessus de l'autre, à distance l'un de l'autre, lors du moulage du boitier.

Comme illustré à la figure 6, la portion de maintien axial 37 est par exemple une languette s'étendant en saillie depuis le corps 34 de l'élément conducteur, par exemple dans le plan du corps 34. La languette comprend une ouverture 370 telle qu'un trou traversant dans la direction transverse au plan d'extension du corps.

L'ouverture 370 est adaptée pour y insérer un dispositif de maintien axial 371.

Le dispositif de maintien axial 371 d'un élément conducteur a par exemple la forme de deux embouts s'étendant chacun selon l'axe X, montés de part et d'autre de la languette, au moins l'un des deux s'insérant au moins partiellement dans l'ouverture 370, les embouts étant adaptés pour coopérer ensemble au montage, pour maintenir axialement l'élément conducteur 35, comme illustré à la figure 8. Un tel dispositif de maintien 371 assure aussi le maintien angulaire de l'élément conducteur 35 dans le moule.

Les embouts et l'ouverture sont par exemple à section circulaire. L'élément conducteur est alors toujours libre en rotation autour du dispositif de maintien axial à ce stade.

En variante les embouts et l'ouverture sont à section oblongue ou parallélépipédique, ce qui limite également la rotation de l'élément conducteur autour du dispositif de maintien axial.

Les portions de maintien des deux éléments conducteurs 37 et 37' sont disposées de sorte qu'au moins une partie de la première portion de maintien 37 ne chevauche pas axialement au moins une partie de la deuxième portion de maintien 37'. Les portions de maintien 37, 37' des deux éléments conducteurs sont par exemple décalées angulairement autour de la direction transverse.

Les dispositifs de maintien de chacun des éléments conducteurs peuvent ainsi être montés par au-dessus et par en dessous de chaque élément conducteur, ces deux accès étant disponibles.

Ainsi chaque élément conducteur 35, 35' est maintenu axialement et angulairement dans le moule, par un dispositif de maintien axial propre 371, 371', monté de part et d'autre de la languette.

En particulier, chaque élément conducteur 35, 35' s'étend angulairement d'une première extrémité vers une deuxième extrémité dans le sens trigonométrique. La portion de maintien 37 est par exemple plus proche de la première extrémité que de la deuxième extrémité pour le premier élément conducteur 35, et la portion de maintien 37' est plus proche de la deuxième extrémité que de la première extrémité pour le deuxième élément conducteur 35'. Lorsque les deux éléments conducteurs sont l'un au-dessus de l'autre, les portions de maintien 37, 37' sont donc effectivement axialement éloignées.

La distance entre les deux méplats 37 et 37' de chaque élément conducteur permet de limiter le risque de court-circuit par pont salin.

Les dispositifs de maintien de chacun des éléments conducteurs 35, 35' pourront par exemple s'étendre depuis le moule utilisé pour la réalisation du moulage boitier.

En variante, la portion de maintien 37 fait partie du corps 34 de l'élément conducteur 35, dans une configuration dans laquelle le corps 34' de l'élément conducteur 35' présente localement une découpe dégageant axialement ladite portion de maintien 37 selon la direction transverse.

De plus l'élément conducteur 35 comprend avantageusement un méplat d'appui 39 formé sur la tranche de l'élément conducteur, c'est-à-dire sensiblement parallèlement à l'axe X. Le méplat d'appui 39 est mis en butée radiale contre le moule pour la réalisation du corps. Un tel méplat permet de mettre en position l'élément conducteur contre le moule et de limiter le mouvement radial de l'élément conducteur lors du moulage, en limitant la rotation possible de l'élément conducteur autour du dispositif de maintien axial.

Le moule a avantageusement un angle de dépouille prévu pour que l'on puisse facilement retirer le plastique du moule. Ainsi le méplat d'appui 39 est en contact en appui radial sur le moule au niveau d'une seule de ses deux arêtes le long de la tranche selon l'axe X. On permet ainsi un moulage tout autour des éléments conducteurs excepté au niveau de l'arête qui est collée au moule.

Avantageusement, dans la configuration précédente pour chaque élément conducteur 35, 35' s'étendant angulairement d'une première extrémité vers une deuxième extrémité dans le sens trigonométrique, le méplat d'appui 39 est par exemple plus proche de la deuxième extrémité que de la première extrémité pour le premier élément conducteur 35, et le méplat d'appui 39' est plus proche de la première extrémité que de la deuxième extrémité pour le deuxième élément conducteur 35'. Le méplat d'appui 39 du premier élément conducteur est donc angulairement opposé le long de l'élément conducteur à la portion de maintien 37 du premier élément conducteur et de même pour le deuxième élément conducteur.

Lorsque les deux éléments conducteurs sont l'un au-dessus de l'autre selon l'axe X, les méplats d'appui 39, 39' sont donc angulairement à distance l'un de l'autre. La distance angulaire entre les deux méplats 39 et 39' permet de limiter le risque de court-circuit par pont salin.

De plus pour éviter la déformation du cuivre lors de l'injection du plastique, pour chaque élément conducteur, des appuis en des points angulairement décalés autour de l'axe X le long de l'interconnecteur 30 seront avantageusement utilisés.

En effet lors de la fabrication de l'interconnecteur chaque élément conducteur est d'abord mis en position par le dispositif de maintien axial 371 puis mis en butée grâce au méplat d'appui 39 pour finalement être donc maintenu serré par un dispositif d'appui axial 381.

Pour cela chaque élément conducteur comprendra également avantageusement une surface d'appui axial 38, 38' adaptée pour recevoir en appui axial de part et d'autre de ladite surface le dispositif d'appui axial 381. Un tel dispositif d'appui axial permet de serrer en position l'élément conducteur pour éviter le mouvement radial de l'élément conducteur.

La surface d'appui axial 38 est avantageusement une partie du corps 34 de l'élément conducteur. La surface d'appui axial est sensiblement plane et sensiblement perpendiculaire à l'axe X et le dispositif d'appui axial s'étendant selon l'axe X vient en appui de part et d'autre de la surface 38.

Le dispositif d'appui 381 est par exemple composé de deux tiges l'une en appui au-dessus et l'autre en appui en dessous en regard de la tige en appui au-dessus.

La surface d'appui axial 38 est avantageusement plus proche de l'extrémité de l'élément conducteur opposée à l'extrémité de l'élément conducteur la plus proche de la portion de maintien 37. Ainsi le maintien le long de l'élément conducteur entre la première et la deuxième extrémité de l'élément conducteur 35 par le dispositif de maintien 371 d'un côté et le dispositif d'appui axial 381 de l'autre permet d'éviter au mieux la déformation de l'élément conducteur 35.

La distance angulaire entre les surfaces d'appui axial 38, 38' permet également de limiter le risque de court-circuit par pont salin.

La matière isolante est ensuite injectée pour former le boitier de l'interconnecteur moulé autour des deux éléments conducteurs. La matière isolante pourra être une matière plastique renforcée par des fibres ou encore une résine.

A l'issu du moulage les deux dispositifs de maintien axial 371, 371' n'étant pas noyés dans le boitier moulé peuvent être retirés par exemple en même temps qu'est effectué le retrait du moule. Les dispositifs d'appui axial 381, 381' sont également retirés.

Après retrait des dispositifs de maintien, deux trous traversant subsistent dans le boitier ainsi moulé au niveau de là où les dispositifs de maintien étaient montés. Les embouts des dispositifs de maintien axial 371, 371' seront avantageusement de faible diamètre pour laisser seulement des trous de faible diamètre dans le boitier après moulage.

Après retrait des dispositifs d'appui, deux trous non traversant subsistent également dans le boitier ainsi moulé au niveau de là où les dispositifs d'appui étaient montés. Les dispositifs d'appui seront également avantageusement des tiges de faible diamètre pour laisser seulement des trous de très faible diamètre dans le boitier après moulage.

Les pattes 31, 32, 33 et 31', 32', 33' de chaque élément conducteur de l'interconnecteur ainsi moulé sont distribuées le long de l'arc de l'interconnecteur en suivant avantageusement la courbure de l'interconnecteur, comme illustré à la figure 3. Les pattes de chaque élément conducteur sont avantageusement angulairement proches c'est-à-dire séparées d'une faible distance angulaire qui correspond avantageusement à la distance séparant les premières extrémités de l'élément conducteur.

Bien entendu, la description qui précède a été donnée à titre d'exemple uniquement et ne limite pas le domaine de l'invention dont on ne sortirait pas en remplaçant les différents éléments par tous autres équivalents.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres.

## Revendications

1. Interconnecteur (30) pour l'interconnexion entre deux conducteurs d'un bobinage statorique (24) de machine électrique, s'étendant sur un secteur angulaire (α) autour d'un axe X, l'interconnecteur (30) comprenant au moins deux pattes de fixation électriquement conductrices (31, 32) décalées angulairement, chaque patte de fixation électriquement conductrice présentant une surface d'extrémité radiale (300) définissant une surface de connexion pour une portion de conducteur du bobinage (240) de machine électrique, chaque patte de fixation ayant une extrémité libre (301) **caractérisé en ce que** ladite patte présente une distance variable à l'axe au fur et à mesure que l'on se rapproche de son extrémité libre, les surfaces d'extrémité radiale (300) des pattes étant parallèles.

2. Interconnecteur (30) selon la revendication 1 dans lequel la distance à l'axe diminue continûment au fur et à mesure que l'on se rapproche de l'extrémité libre (301).

3. Interconnecteur selon l'une quelconque des revendications précédentes dans lequel, dans un plan de coupe perpendiculaire à l'axe, les pattes (31, 32) présentent sensiblement une même distance à l'axe, quel que soit le plan de coupe perpendiculaire à l'axe.

4. Interconnecteur selon l'une quelconque des revendications précédentes comprenant également des clips de maintien d'autres conducteurs de bobinage (36) adaptés pour diriger une autre portion de conducteur de bobinage vers une électronique de commande.

5. Interconnecteur selon l'une des revendications précédentes comprenant également au moins un corps conducteur (34), les pattes (31, 32, 33) étant connectées entre elles par le corps conducteur (34).

6. Interconnecteur selon l'une quelconque des revendications précédentes dans lequel les surfaces libres (301) des pattes sont sensiblement parallèles.

7. Machine comprenant :
un bobinage statorique (24) s'étendant autour de l'axe X selon une direction circonférentielle,
un interconnecteur (30) selon l'une quelconque des revendications 1 à 6,
dans laquelle les pattes (31, 32) de l'interconnecteur (30) sont disposées le long de la direction circonférentielle du bobinage statorique (24).

8. Machine selon la revendication 7, dans laquelle la portion de conducteur de bobinage (240) est fixée à la surface de connexion (300) de la patte par soudure laser.

9. Machine selon l'une des revendications 7 à 8 dans laquelle chaque patte (31, 32) de l'interconnecteur (30) est connectée à une portion de conducteur du bobinage (240) appartenant à une phase distincte du bobinage.

## Patentansprüche

1. Verbindungselement (30) für die Verbindung zwischen zwei Leitern einer Statorwicklung (24) einer elektrischen Maschine, das sich über einen Winkelsektor (α) um eine Achse X herum erstreckt, wobei das Verbindungselement (30) mindestens zwei elektrisch leitende Befestigungslaschen (31, 32) umfasst, die winklig versetzt sind, wobei jede elektrisch leitende Befestigungslasche eine radiale Endfläche (300) aufweist, die eine Verbindungsfläche für einen Leiterabschnitt der Wicklung (240) der elektrischen Maschine definiert, wobei jede Befestigungslasche ein freies Ende (301) hat, **dadurch gekennzeichnet, dass** die Lasche einen variablen Abstand zu der Achse aufweist, je mehr man sich ihrem freien Ende nähert, wobei die radialen Endflächen (300) der Laschen parallel sind.

2. Verbindungselement (30) nach Anspruch 1, wobei der Abstand zu der Achse kontinuierlich abnimmt, je mehr man sich dem freien Ende (301) nähert.

3. Verbindungselement nach einem der vorhergehenden Ansprüche, wobei, in einer senkrecht zu der Achse verlaufenden Schnittebene, die Laschen (31, 32) im Wesentlichen einen selben Abstand zu der Achse aufweisen, unabhängig von der senkrecht zu der Achse verlaufenden Schnittebene.

4. Verbindungselement nach einem der vorhergehenden Ansprüche, umfassend auch Halteklipse anderer Wicklungsleiter (36), die geeignet sind, einen anderen Wicklungsleiterabschnitt zu einer Steuerungselektronik zu führen.

5. Verbindungselement nach einem der vorhergehenden Ansprüche, umfassend auch mindestens einen leitenden Körper (34), wobei die Laschen (31, 32, 33) untereinander durch den leitenden Körper (34) verbunden werden.

6. Verbindungselement nach einem der vorhergehenden Ansprüche, wobei die freien Flächen (301) der Laschen im Wesentlichen parallel sind.

7. Maschine, umfassend:
eine Statorwicklung (24), die sich um die Achse X herum entlang einer Umfangsrichtung erstreckt,
ein Verbindungselement (30) nach einem der Ansprüche 1 bis 6,
wobei die Laschen (31, 32) des Verbindungselements (30) entlang der Umfangsrichtung der Statorwicklung (24) angeordnet sind.

8. Maschine nach Anspruch 7, wobei der Wicklungsleiterabschnitt (240) an der Verbindungsfläche (300) der Lasche durch Laserschweißen befestigt ist.

9. Maschine nach einem der Ansprüche 7 bis 8, wobei jede Lasche (31, 32) des Verbindungselements (30) mit einem Leiterabschnitt der Wicklung (240) verbunden ist, der zu einer unterschiedlichen Phase der Wicklung gehört.

## Claims

1. Interconnector (30) for the interconnection between two conductors of a stator winding (24) of an electric machine, extending over an angular sector (a) about an axis X, the interconnector (30) comprising at least two angularly offset electrically conductive fastening tabs (31, 32), each electrically conductive fastening tab having a radial end surface (300) defining a connection surface for a portion of conductor of the winding (240) of the electric machine, each fastening tab having a free end (301), **characterized in that** said tab has a distance to the axis that varies with increasing proximity to its free end, the radial end surfaces (300) of the tabs being parallel.

2. Interconnector (30) according to Claim 1, wherein the distance to the axis decreases continuously with increasing proximity to the free end (301).

3. Interconnector according to either one of the preceding claims, wherein, in a section plane perpendicular to the axis, the tabs (31, 32) have substantially one and the same distance to the axis, regardless of the section plane perpendicular to the axis.

4. Interconnector according to any one of the preceding claims, also comprising clips for holding other winding conductors (36) that are designed to direct another winding conductor portion towards control electronics.

5. Interconnector according to one of the preceding claims, also comprising at least one conductive body (34), the tabs (31, 32, 33) being connected to one another by the conductive body (34).

6. Interconnector according to any one of the preceding claims, wherein the free surfaces (301) of the tabs are substantially parallel.

7. Machine comprising:
a stator winding (24) extending around the axis X in a circumferential direction,
an interconnector (30) according to any one of Claims 1 to 6,
wherein the tabs (31, 32) of the interconnector (30) are disposed along the circumference direction of the stator winding (24).

8. Machine according to Claim 7, wherein the winding conductor portion (240) is fastened to the connection surface (300) of the tab by laser welding.

9. Machine according to either of Claims 7 and 8, wherein each tab (31, 32) of the interconnector (30) is connected to a portion of conductor of the winding (240) belonging to a distinct phase of the winding.
